# EUROPEAN PATENT SPECIFICATION

(11) **EP 1 728 693 B1**
(45) Date of publication and mention of the grant of the patent: **27.07.2011**
(21) Application number: 06252419.4
(22) Date of filing: 08.05.2006
(51) Int. Cl.: B60R 22/347

(54) **Automatic locking retractor**
Automatisch sperrender Aufroller
Rétracteur à blocage automatique

(30) Priority: 09.05.2005 US 679040 P
(43) Date of publication of application: 06.12.2006
(73) Proprietor: Sure-Lok, Inc., Bethlehem, PA 18020-8027 (US)
(72) Inventor: Cardona, Edgardo, Walnutport, Pennsylvania 18088 (US)
(74) Representative: Moreland, David

(56) References cited:
- JP-A- 9 177 852
- US-A- 3 632 058
- US-A- 3 809 332
- US-A- 3 880 379
- US-A- 3 944 163
- US-A- 4 498 643
- US-A- 4 958 853
- US-A1- 2004 070 256

## Description

### Cross-Reference to Related Applications

This application is related to, and claims the benefit of priority from, United States Provisional Patent Application Serial No. 60/679,040, filed May 9, 2005.

### Field of the Invention

The present invention relates to the field of vehicular restraint belts, and more particularly, the present invention relates to a retractor having a belt that automatically locks against further extension.

### Background of the Invention

Webbed belts are commonly used as restraints in motor vehicles. Furthermore, it is well known to provide a retractor to automatically retract a webbed belt when it is not in use. Although most often associated with passenger restraint in motor vehicles, webbed belts are also used to secure mobility aids, such as wheelchairs, while the mobility aid and its occupant are being transported inside the vehicle. In this regard, it is known to use a webbed belt and associated retractor to secure a wheelchair, typically by employing an S-shaped hook at one end of the webbed belt for engagement with the wheelchair. It is also known to lock webbed belts against further extension so that the wheelchair may be held under tension while it is subjected to the acceleration and deceleration forces typically encountered during vehicular transportation. A number of apparatuses have previously been proposed for this purpose, and these apparatuses vary both in design and complexity.

An example of such an apparatus is disclosed in US 3944163 A.

When utilized to secure mobility aids, retractors are often connected to a vehicle on a floor-mounted track. When the operator of the vehicle is attempting to secure a wheelchair using a retractor, it is awkward for the operator to operate a release mechanism on the retractor while extending the webbed belt. For this reason, the spool-locking mechanisms of such retractors may be rendered inoperable until a certain length of the webbed belt has been extended from the retractor. However, previous retractors have not provided a method or apparatus by which the operator can readily discern whether the required length of belt has been deployed to engage the spool-locking mechanism of the retractor. If the spool-locking mechanism is not engaged while the vehicle is moving, the occupant of the wheelchair is placed at great risk of bodily harm.

It would be desirable to have a retractor having an automatic locking belt which is of simple inexpensive design, operates reliably, and provides an indication to the operator of the retractor that the spool-locking mechanism is engaged.

### Summary of the Invention

The present invention provides an automatically locking retractor according to the appended claims. The automatically locking retractor comprises a housing, a spool disposed within the housing, and a belt connected to the spool. The belt is windable between a fully extended position, a fully retracted position, and a partially extended position. A spool-locking mechanism is engageable with the spool while the belt is moving between the partially extended position and the fully extended position to restrain the belt against further extension in response to movement of the belt toward the fully retracted position. Indicia may be mounted on the belt for alerting the user that the spool-locking mechanism is engageable, wherein the indicia is disposed outside of the housing when the spool-locking mechanism is engageable, and disposed inside the housing when the spool-locking mechanism is not engageable.

The spool is operative to wind the belt by rotating in a first direction, wherein the belt extends from the spool toward the fully extended position of the belt, and a second direction, wherein the belt retracts onto the spool toward the fully retracted position of the belt. Furthermore, the spool may be biased for rotation in the second direction. To restrain the spool against moving in the first direction, the spool-locking mechanism is engageable with a toothed wheel, which is connected to the spool. A clutch ring is engageable with the spool-locking mechanism to separate the spool-locking mechanism from the toothed wheel while the spool is moving in the first direction. A spacer is connected to the spool-locking mechanism and engageable with the belt to separate the spool-locking mechanism from the toothed wheel while the belt moves between the fully retracted position and the partially extended position.

The clutch ring is biased into frictional engagement with the spool, whereby the clutch ring moves between a first position, wherein the clutch ring engages the spool-locking mechanism to restrain the spool-locking mechanism from engaging the toothed wheel, and a second position, wherein the clutch ring is spaced from the spool-locking mechanism. A wave spring may engage the clutch ring to bias the clutch ring into frictional engagement with the spool. Alternatively, magnets may be attached to the clutch ring to hold the clutch ring in frictional engagement with the spool.

### Brief Description of the Drawings

The description herein makes reference to the accompanying drawings wherein like referenced numerals refer to like parts throughout several views and wherein:
**FIG. 1** is a perspective view of the automatically locking retractor of the present invention installed in a floor-mounted track;
**FIG. 2** is an exploded perspective view of the automatically locking retractor of the present invention:
**FIG. 3** is a perspective view of the frame of the automatically locking retractor of the present invention;
**FIG. 4** is a perspective view of the clutch ring of the automatically locking retractor of the present invention;
**FIG. 5A** is a side view of the automatically locking retractor of the present invention wherein the spacing sensor engages the webbed belt;
**FIG. 5B** is a side view of the automatically locking retractor of the present invention wherein the keeper of the clutch ring engages the spool locking mechanism;
**FIG. 5C** is a side view of the automatically locking retractor of the present invention wherein the pawls of the spool-locking mechanism engage the toothed wheels of the spool; and
**FIG. 6** is a perspective view of an alternative embodiment of the clutch ring of the automatically locking retractor of the present invention.

### Detailed Description of the Invention

Referring to the drawings, the present invention will now be described in detail with reference to the disclosed embodiment.

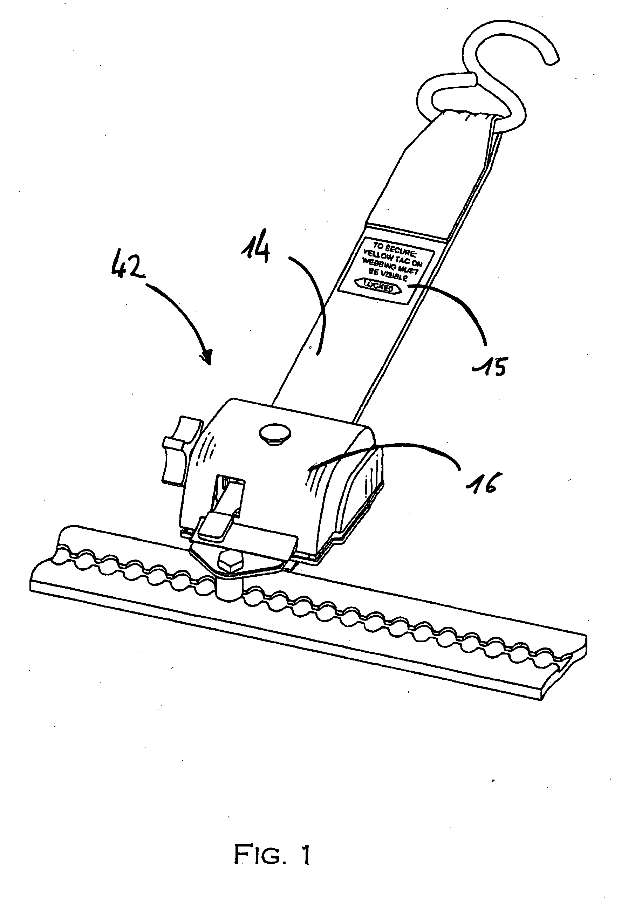

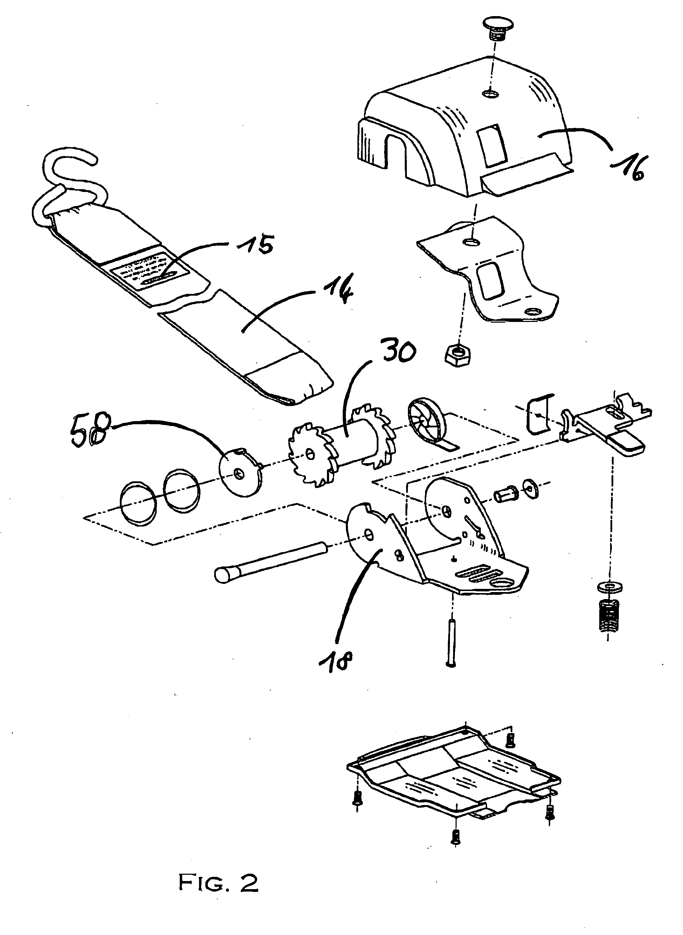

**FIG. 1** shows an automatically locking retractor 10 of the present invention. The retractor 10 is mountable within a vehicle (not shown) to secure occupants or cargo. One particular application of the retractor 10 is in securing a mobility aid, such as a wheelchair (not shown). In order to allow adjustable positioning of the wheelchair within the vehicle, the retractor 10 may be slidably mountable in a floor-mounted track 2 on the floor 4 of the vehicle. In order to secure the wheelchair, the retractor 10 includes an S-shaped hook 12 connected to a webbed belt 14 which is retractable into a housing 16. As shown in **FIG. 2**, the housing 16 encloses a frame 18 and a spool 30, to which the webbed belt 14 is secured. The housing 16 further encloses a spool-locking mechanism 42 which is engageable with the spool 30 to selectively restrain movement of the spool 30. Indicia 15 may be located on the webbed belt 14 to alert the user of the automatically locking retractor 10 that the spool-locking mechanism 42 is operable. The frame 18 protrudes from the rear of the housing 16, where a mounting stud 20 is attached to the frame 18 for connection to the floor-mounted track 2.

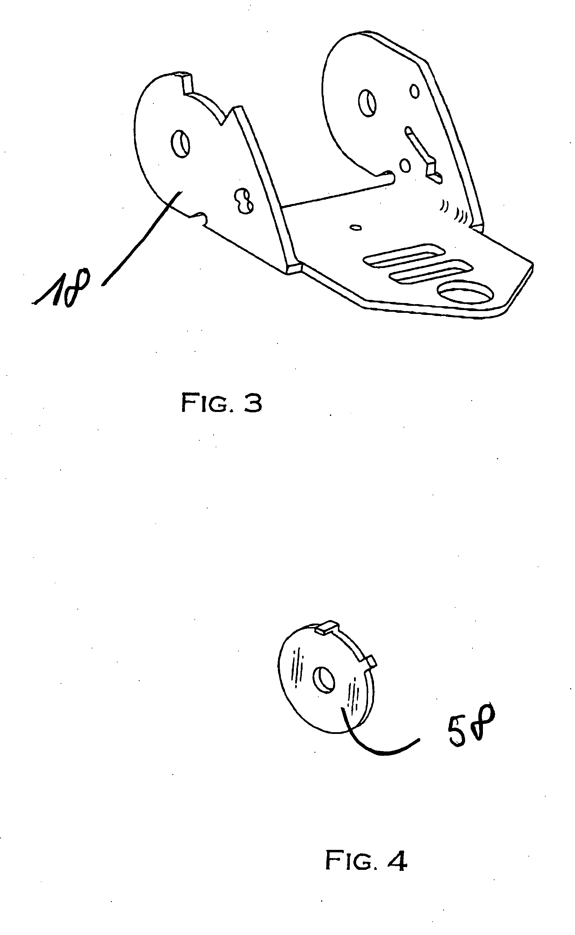

The housing 16 includes an upper housing portion 16A and a lower housing portion 16B that are connected by fasteners 22 to enclose and surround the spool 30, the spool-locking mechanism 42, and other internal components of the automatically locking retractor 10, thereby protecting the internal components of the automatically locking retractor 10 against damage due to excessive dirt, moisture, or external forces. The frame 18 is at least partially disposed within the housing 16. As shown in **FIG. 3****,** the frame 18 is typically formed of a flat stamping which is then folded into the final configuration thereby forming an anchor flange 18A, a first wall portion 18B, and a second wall portion 18C. The anchor flange 18A partially extends out of the rear of the housing 18, through a passageway formed where the upper housing portion 16A and the lower housing portion 16B meet. The first wall portion 18B and the second wall portion 18C are substantially similar, opposite one another, and extend substantially perpendicular to the anchor flange 18A. To mount the spool 30 to the frame 18, a mounting hole 34 is formed in each of the first wall portion 18B and the second wall portion 18C of the frame 18. To mount the spool-locking mechanism 42 to the frame 18, apertures 44 are formed in each of the first wall portion 18B and the second wall portion 18C of the frame 18. The connections between the frame 18, the spool 30, and the spool-locking mechanism 42 will be explained in greater detail herein.

To allow attachment of accessories (not shown) to the automatically locking retractor 10, an accessory stud 24 may be located at the exterior of the upper housing portion 16A. The accessory stud 24 extends through an aperture in the upper housing portion 16A, where it is supported by a stud bracket 26. The stud bracket 26 is disposed within the housing 16 adjacent to the upper housing portion 16A. At one end of the stud bracket 26, a bracket flange 28 rests against the anchor flange 18A of the frame 18 when the housing 16 is assembled. In order to secure the bracket flange 28 to the anchor flange 18A, a threaded portion of the mounting stud 20 extends through coaxial mounting holes in the anchor flange 18A and the bracket flange 28, which arc secured to the threaded portion of the mounting stud 20 by a nut 21. The mounting stud 20 is slidably receivable in the floor-mounted track 2 of the vehicle and may be quickly installed, repositioned, locked in place, and removed from the floor-mounted track 2 when the retractor 10 is no longer needed.

In order to connect the webbed belt 14 to the frame 18, the spool 30 is disposed within the housing 16. The spool 30 is carried upon a shaft 32 such that the spool 30 and the shaft 32 rotate in unison. The shaft 32 is secured to the frame 18 so that the shaft 32 may rotate with respect to the frame 18. In order to rotatably mount the shaft 32 to the frame 18, the shaft 32 extends through the mounting holes 34 in the first wall portion 18B and the second wall portion 18C of the frame 18, and is secured in place by fasteners 33. The spool 30 includes at least one toothed end, or toothed wheel 36. The toothed wheel 36 may be formed integrally with the spool 30, or may he fixedly connected to the spool 30 to allow ratcheted motion of the spool 30, as will be discussed in detail herein. Furthermore, the spool 30 may include two toothed wheels 36, one formed integrally with or connected to each end of the spool 30.

The webbed belt 14 is connected to the spool 30, and the webbed belt 14 may be wound upon the spool 30 to thereby retract the webbed belt 14 into the housing 18. The webbed belt 14 has a fully extended position, where a maximum length of the webbed belt 14 extends from the housing 18, and a fully retracted position, where a minimum length of the webbed belt 14 extends from the housing 18. For example, the fully retracted position of the webbed belt 14 may be defined as the position where the S-shaped hook 12 engages the exterior of the housing 18 to prevent further retraction of the webbed belt 14. The webbed belt 14 also has a partially extended position, which will be described in detail herein. In terms of the positions of the webbed belt 14, the spool 30 can be described as moveable in a first direction, wherein the webbed belt 14 deploys from the spool 30 toward a fully extended position of the webbed belt 14, and a second direction, wherein the webbed belt 14 retracts onto the spool 30 toward a fully retracted position of the webbed belt 14.

In order to allow automatic retraction of the webbed belt 14 into the housing 16, a power spring 38 is counected to the spool 30. The power spring 38 biases the spool 30 for rotation in the second direction of the spool 30, thereby urging the webbed belt 14 toward the fully retracted position of the webbed belt 14. The power spring 38 is a spiral spring which has a fixed connection with the shaft 32 at the interior end of the power spring 38. The exterior end of the power spring 38 is connected to the second wall portion 18C of the frame 18 by a first spring engagement pin 40, which is connected to the second wall portion 18C of the frame 18. A second spring engagement pin 41 is connected to the second wall portion 18C of the frame 18 and engages the outer periphery of the power spring 38 to limit expansion of the power spring 38. The power spring 38 is thus disposed between the second wall portion 18C of the frame 18 and the toothed wheel 36 of the spool 30. In this fashion, the webbed belt 14 may be withdrawn from the retractor 10 by pulling on the S-shaped hook 12, wherein the spool 30 rotates in the first direction, and the webbed belt 14 may then be automatically retracted into the retractor 10 by the biasing force of the power spring 38, which rotates the spool 30 in the second direction until the webbed belt 14 reaches the fully retracted position. Although the power spring 38 provides tension to the webbed belt 14, a crank 39 may be affixed to an end of the shaft 32, on the exterior of the housing 16, to allow manual tensioning of the webbed belt 14, for example, in the event that the power spring 38 fails.

In order to lock the webbed belt 14 against extension so that the webbed belt 14 may apply tension to the wheelchair, a spool-locking mechanism 42 is engageable with the toothed wheels 36 on the spool 30. The spool-locking mechanism 42 is pivotally attached to the frame 18. In order to pivotally attach the spool-locking mechanism 42 to the frame 18, opposite ends of the spool-locking mechanism 42 are seated in the apertures 44 in the first wall portion 18B and the second wall portion 18C of the frame 18. The spool-locking mechanism 42 extends between the apertures 44 and is loosely received within the apertures 44 so that the spool-locking mechanism 42 may rotate through an arc of approximately 25° with respect to the frame 18, about an axis extending through the apertures 44. The spool-locking mechanism 42 includes at least one pawl 46 which is engageable with the toothed wheel 36. Consequentiy, if toothed wheels 36 are provided at each end of the spool 30, the spool-locking mechanism 42 may include a pair of pawls 46, each engageable with one of the toothed wheels 36. The pawls 46 are engageable with the toothed wheels 36 to restrain the spool 30 against rotation in the first direction. However, the teeth 37 of the toothed wheels 36 are raked toward the pawls 46 such that the spool 30 may rotate freely in the second direction. While the spool 30 is rotating in the second direction, the spool-locking mechanism 42 pivots in the apertures 44, thereby allowing the pawls 46 to pivotally move past each tooth 37 of the toothed wheels 36. To ensure engagement of the pawls 46 with the toothed wheels 36 when the spool 30 is rotating in the first direction, a spring 48 engages the spool-locking mechanism 42 to bias the pawls 46 into engagement with the toothed wheels 36 so that the pawls 46 cannot pivot past the teeth 37 of the toothed wheel 36, thereby restraining the spool 30 against rotating in the first direction. The spring 48 is seated on a pin 50, which is attached to the anchor flange 18A of the frame 18. The pin 50 extends from the anchor flange 18A toward an aperture formed through the spool-locking mechanism 42 so that the spring 48 engages both the anchor flange 18A and the spool-locking mechanism 42. So that the pawls 46 may be manually disengaged from the toothed wheels 36, the spool-locking mechanism 42 includes a release lever 52. The release lever 52 extends through an aperture 54 formed through the upper housing portion 16A, and may be pressed by the user of the retractor 10 to pivot the spool locking mechanism 42, thereby disengaging the pawls 46 from the toothed wheels 36.

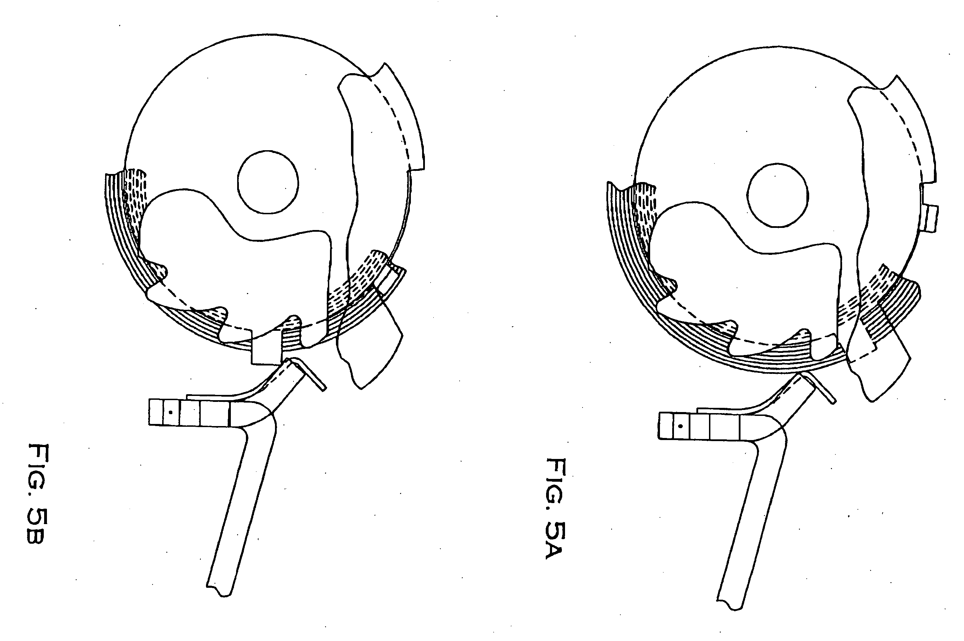

At this point, it should be apparent that the pawls 46 must be disengaged from the toothed wheels 36 in order to allow extension of the webbed belt 14. Two separate structures cooperate to achieve this function, a spacing sensor 56 and a clutch ring 58. As shown in **FIG. 4**, the clutch ring 58 engages the spool-locking mechanism 42 to restrain the pawls 46 of the spool-locking mechanism 42 from engaging the toothed wheels 36 while the spool 30 is rotating in the first direction, and the clutch ring 58 disengages from the spool-locking mechanism 42 upon movement of the spool 30 in the second direction thereby allowing the spool-locking mechanism 42 to engage the toothed wheels 36. As shown in **FIGS. 5A-5C****,** the spacing sensor 56 is attached to the spool-locking mechanism 42 and engageable with the webbed belt 14 to prevent engagement of the pawls 46 with the toothed wheels 36 until a desired length of the webbed belt 14 has been extended from the housing 16.

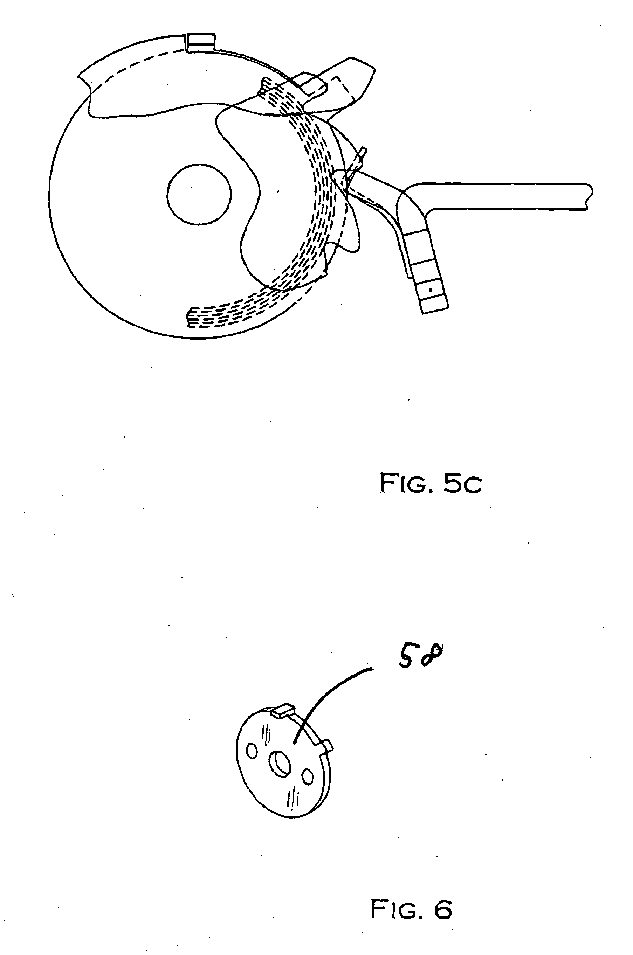

The spacing sensor 56 is connected to the spool-locking mechanism 42 adjacent to the webbed belt 14. The spacing sensor 56 is a flange that extends from the spool-locking mechanism. 42 toward the webbed belt 14. It will be appreciated from the previous description of retraction of the webbed belt 14 upon the spool 30 that the diameter of the outer surface of the rolled portion of the webbed belt 14 varies between a maximum diameter when the webbed belt 14 is in the fully retracted position, and a minimum diameter when the webbed belt 14 is in the fully extended position. Accordingly, the spacing sensor 12 is engageable with the outer surface of the rolled portion of webbed belt 14 to sense the degree of extension of the webbed belt 14. Thus, as the diameter of the webbed belt 14 upon the spool 30 becomes significantly large due to retraction of the webbed belt 14 into the housing 30, as seen in **FIG. 5A****,** the spacing sensor 56 engages the webbed belt 14, thereby disengaging the pawls 46 from the toothed wheels 36. The point at which the spacing sensor 56 causes disengagement of the pawls 46 from the wheels 36 corresponds to the partially extended position of the webbed belt 14. While the spacing sensor 56 is engaged with the webbed belt thereby spacing the pawls 46 from the toothed wheels 36, the spool-locking mechanism 42 will not be operable. Consequently, the spool-locking mechanism 42 is not operable when the webbed belt 14 is between the fully retracted position and the partially extended position, as seen in **FIG. 5A****.** However, once the webbed belt 14 reaches the partially-extended position, wherein the diameter of the webbed belt 14 remaining on the spool 30 is such that the spacing sensor 56 does not engage the webbed belt 14, the spacing sensor 56 will no longer prevent the spool-locking mechanism. 42 from engaging the toothed wheels 36, and the spool-locking mechanism 42 will thus be operable while the webbed belt 14 is between the partially extended position and the fully extended position, as seen in **FIGS. 5B** and **5C****.**

Since the spool-locking mechanism 42 becomes engageable with the toothed wheels 36 when the webbed belt 14 reaches the partially extended position, engagement of the toothed wheels 36 with the pawls 46 would prevent further movement of the spool 30 in the first direction absent additional means for preventing engagement of the pawls 46 and the toothed wheels 36. For this purpose, the clutch ring 58 is included to separate the pawls 46 of the spool-locking mechanism 42 from the toothed wheels 36 of the spool 30 while the webbed belt 14 is moving from the partially extended position toward the fully extended position. The clutch ring 58 is mounted on the shaft 32 between one of the toothed wheels 36 of the spool 30 and the first wall portion 18B of the frame 18. The clutch ring 58 has a nominal radius slightly less than that of the toothed wheels 46. The clutch ring 58 is coaxially mounted on the shaft 32 with the spool 30, and shares a common rotational axis with the spool 30. The clutch ring 58 may be rotated by frictional engagement of the clutch ring 58 and the spool 30. However, the range of rotational motion of the clutch ring 58 is limited.

To create a frictional engagement between the clutch ring 58 and the outer surface of one of the toothed wheels 36, wave springs 60 are coaxially mounted with the clutch ring 58 and the spool 30 on the shaft 32. The wave springs 60 are positioned between the first wall portion 18B of the frame 18 and the clutch ring 58. Thus, the wave springs 60 bias the clutch ring 58 into engagement with the toothed wheel 36. In this manner, the clutch ring 58 tends to rotate in unison with the spool 30.

In order to restrict the range of motion of the clutch ring 58, a tab or stop 68 extends from the outer periphery of the clutch ring 58, substantially perpendicular to the longitudinal axis of the shaft 32. The stop 68 of the clutch ring 58 is received in a semi-circular notch 62 formed in the first wall portion 18B of the frame 18. The stop 68 is engageable with the semi-circular notch 62 to limit the range of motion of the clutch ring 58 between a first position, wherein the stop 68 engages a first end 64 of the semi-circular notch 62 and a second position, wherein the stop 68 engages a second end 66 of the semi-circular notch 62. The first end 64 of the semi-circular notch 62 is separated from the second end 66 of the semi-circular notch 62 by approximately 60° of arc, and travel of the stop 68 within the semi-circular notch 62 limits the range of motion of the clutch ring 58 to approximately 40° of arc.

In order to selectively disengage the spool-locking mechanism 42 from the toothed wheels 36, a tab or keeper 70 extends radially from the periphery of the clutch ring 58. The radius of the keeper 70 is slightly greater than that of the toothed wheels 36. Thus, the keeper 70 is operative to disengage the spool-locking mechanism 42 when the clutch ring 58 is rotated to engage the keeper 70 with the toothed wheels 36. Particularly, the keeper 70 spaces the pawls 46 from the toothed wheels 36 when the clutch ring 58 is in the first position. When the clutch ring 58 is in the second position, the keeper 70 is rotated away from the spool-locking mechanism 42, such that the pawls 46 are not prevented from engaging the toothed wheels 36 by the clutch ring 58, as seen in **FIG. 5A****.** Thus, when the spool 30 rotates in the first direction, the clutch ring 58 rotates with the spool 30 until the stop 68 engages the first end 64 of the semi-circular notch 62, thereby placing the clutch ring 58 in the first position and engaging the keeper 70 and the spool-locking mechanism 42 to separate the pawls 46 from the toothed wheels 36, as seen in **FIG. 5B****.** Upon subsequent rotation of the spool 30 in the second direction, the clutch ring 58 rotates with the spool 30 until the stop 68 reaches the second end 66 of the semi-circular notch 62, thereby placing the clutch ring 58 in the second position and disengaging the keeper 70 from the spool-locking mechanism 42, as seen in **FIG. 5C**. It should be noted that the keeper 70 can only move to the first position to thereby restrain the pawls 46 from engaging the toothed wheels 36 while the pawls 46 are spaced from the toothed wheels 36 by engagement of the spacing sensor 56 with the rolled portion of the webbed belt 14. However, once the keeper 70 is positioned in engagement with the spool-locking mechanism 42 to prevent the pawls 46 from engaging the toothed wheels 46, the keeper 70 may remain in this position after the webbed belt 14 reaches the partially extended position and the spacing sensor 56 no longer engages the rolled portion of the webbed belt 14.

From the foregoing, it will be appreciated that when the webbed belt 14 is in the fully retracted position, the spacing sensor 56 engages the webbed belt 14 to thereby pivot the spool-locking mechanism 42 away from the toothed wheels 36, as seen in **FIG. 5A****,** and initial movement of the spool 30 in the first direction causes the clutch ring to move to the first position so that the keeper 70 engages the pawls 46, as seen in **FIG. 5B****.** Once the webbed belt 14 has been sufficiently withdrawn as to preclude engagement of the spacing sensor 56 and the surface of the rolled portion of the webbed belt 14, the pawls 46 of the spool-locking mechanism 42 are maintained in a spaced-apart relationship from the toothed wheels 36 of the spool 30 only so long as the spool 30 is stationary or during such time as the spool 30 is moving in the first direction. If the spool 30 is rotated in the second direction, frictional engagement of the spool 30 and the clutch ring 58 rotates the clutch ring 58 toward the second position, so that the keeper 70 moves out of engagement with the spool-locking mechanism 42. When this occurs, the pawls 46 are no longer restrained from moving toward the toothed wheels 36, and the pawls 46 are urged into engagement with the toothed wheels 46 by the spring 48, thereby locking the webbed belt 14 against further movement toward the fully extended position, as seen in **FIG. 5C****.** However, as long as the spacing sensor 56 is engaged with the webbed belt 14, the webbed belt 14 cannot be locked, as the spacing sensor 56 renders the spool-locking mechanism 42 inoperable.

In order to provide a visual indication that the spool-locking mechanism. 42 is operable, and the webbed belt 14 can thus be locked against further extension, indicia 15 is affixed to one surface of the webbed belt 14. The indicia 15 serves to signal to the user of the automatically locking retractor 10 that the webbed belt 14 is lockable, and may include a warning alerting the user that the webbed belt 14 is not lockable if the indicia 15 is not visible. Accordingly, the location of the indicia 15 is selected to ensure that the indicia 15 is only disposed outside of the housing 16, and thus visible, when the spacing sensor 56 is not engaged with the webbed belt 14, and the spool locking assembly 42 is thus operable to restrain the webbed belt 14 against further extension upon movement of the clutch ring 58 away from the first position, in response to movement of the spool 30 in the second direction.

In another embodiment of the present invention, clutch ring 58 and its associated wave springs 60 are replaced by a magnetic clutch ring 72. as shown in **FIG. 6****.** The magnetic clutch ring 72 includes a stop 74 and a keeper 76, which operate in the same manner as the stop 68 and keeper 70 described in connection with the operation of the clutch ring 58. In order in hold the magnetic clutch ring 72 in frictional engagement with the spool 30, one or more magnets 78 are embedded in the magnetic clutch ring 72. By positioning the magnetic clutch ring 72 with the embedded magnets 78 adjacent to one of the ends of the spool 30, the magnetic clutch ring 72 is magnetically attracted to the end of the spool 30. For this purpose, the spool 30 is fabricatcd from a ferromagnetic material, such as steel, in embodiments where a magnetic clutch ring 72 is utilized. The magnets 78 in the magnetic clutch ring 72 hold the magnetic clutch ring 72 in frictional engagement with the end of the spool 30, and in this fashion., the magnetic clutch ring 72 follows the motion of the spool 30 to the extent permitted by engagement of the stop 74 with the first end 64 and the second end 66 of the semi-circular notch 62. In this embodiment, therefore, the wave springs 60 may be eliminated, thereby simplifying the structure.

In use, a user wishing to secure a mobility aid, such as a wheelchair, attaches one or more automatically locking retractors 10 to the floor-mounted track 2 in the floor 4 of the vehicle. The user then positions the wheelchair with respect to the automatically locking retractors 10 and connects the automatically locking retractors 10 to the wheelchair.

When the user connects each automatically locking retractor 10 to the wheelchair, the webbed belt 14 of the automatically locking retractor 10 is initially in the fully retracted position. Accordingly, the pawls 46 of the spool-locking mechanism 42 are spaced from the toothed wheels 36 of the spool 30 by engagement of the spacing sensor 56 with the rolled portion of the webbed belt 14. Thus, the spool-locking mechanism 42 is inoperable at that time, and the indicia 15 is not visible to the user. The user then grasps the S-shaped hook 12, or other connector, and begins to withdraw the webbed belt 14. As the user does so, the spool 30 rotates in the first direction, and the clutch ring 58 moves toward the first position. Since the pawls 46 are spaced from the toothed wheels 36 by engagement of the spacing sensor 56 and the webbed belt 14, the keeper 70 of the clutch ring 58 moves to a position adjacent to the spool-locking mechanism 42, where the keeper 70 may engage the spool-locking mechanism 42 to prevent engagement of the pawls 46 with the toothed wheels 36. At some point slightly after the user has withdrawn a sufficient amount of the webbed belt 14 to reach the partially extended position of the webbed belt 14, wherein the spacing sensor has disengaged the webbed belt 14, the indicia 15 is visible to the user, and the spool-locking mechanism 42 is operable. At any point thereafter, the user may cease withdrawing the webbed belt from the housing 16, and engage the S-shaped hooks 12 with the wheelchair. As the user does so, the user slightly retracts the webbed belt 14 into the spool-locking mechanism 42, and the clutch ring 58 moves from the first position toward the second position, thereby engaging the pawls 46 of the spool-locking mechanism 42 with the toothed wheels 36, locking the webbed belt 14 against further extension.

When the user wishes to release the wheelchair from securement by the automatically locking retractor 10, the user depresses the release lever 52, which temporarily disengages the spool-locking mechanism 52 so that the S-shaped hook 12 may be disengaged from the wheelchair. After the user has done so, the user may guide the webbed belt 14 back into the housing 16, while the biasing force of the power spring 38 pulls the webbed belt 14 toward the fully retracted position. The user may then remove the automatically locking retractor 10 from the floor-mounted track 2 for storage, if desired.

White the invention has been described in connection with what is presently considered to be the most practical and preferred embodiment, it is to be understood that the invention is not to be limited to the disclosed embodiments, but to the contrary, it is intended to cover various modifications or equivalent arrangements included within the scope of the appended claims. The scope is to be accorded the broadest interpretation so as to encompass all such modifications and equivalent structures as is permitted under the law.

## Claims

1. An automatically locking retractor (10) comprising:
a housing (16);
a spool (30) disposed within said housing;
a belt (14) connected to said spool and windable between a fully extended position, a fully retracted position, and a partially extended position;
a spool-locking mechanism (42) engageable with said spool while said belt is moving between said partially extended position and said fully extended position; and
indicia (15) mounted on said belt for alerting a user that said spool-locking mechanism is engageable, **characterized in that** said indicia is disposed outside of said housing when said spool-locking mechanism is engageable.

2. The automatically locking retractor of claim 1, further comprising:
said partially extended position between said fully extended position and said fully retracted position.

3. The automatically locking retractor of claim 1, further comprising:
said spool-locking mechanism (42) engages said spool (30) restrain said belt (14) against further extension in response to movement of said belt toward said fully retracted position.

4. The automatically locking retractor of claim 1, further comprising:
said indicia (15) disposed within said housing (16) when said belt is between said partially extended position and said fully retracted position.

5. An automatically locking retractor (10) according to claim 1, further comprising:
a frame (18);
at least one toothed wheel (36) connected to said spool;
a clutch ring (58) engageable with said spool-locking mechanism to separate said spool-locking mechanism from said toothed wheel while said spool is moving in said first direction; and
a spacer connected to said spool-locking mechanism and engageable with said belt to separate said spool-locking mechanism from said toothed wheel while said belt moves between said fully retracted position and said partially retracted position,
wherein said belt (14) has a fully extended position, a fully retracted position and a partially extended position between said fully extended position and said fully retracted position;
wherein said spool (30) is mounted to said frame for winding said belt, movable in a first direction, wherein said belt extends from said spool toward a fully extended position of said belt, and a second direction, wherein said belt retracts onto said spool toward said fully retracted position of said belt, and said spool biased for rotation in said second direction;
and wherein said spool-locking mechanism (42) is engageable with said toothed wheel to restrain said spool against moving in said first direction.

6. The automatically locking retractor of claim 5, further comprising:
said spool-locking mechanism (42) biased toward engagement with said toothed wheel. (36).

7. The automatically locking retractor of claim 5, further comprising:
said clutch ring (58) movable between a first position, wherein said clutch ring engages said spool-locking mechanism (42) to restrain said spool-locking mechanism (42) from engaging said toothed wheel (36), and a second position, wherein said clutch ring is spaced from said spool-locking mechanism.

8. The automatically locking retractor of claim 7, further comprising:
said clutch (58) ring biased into frictional engagement with said toothed whee (36) for movement between said first position and said second position.

9. The automatically locking retractor of claim 5, further comprising:
a wave spring (60) for biasing said clutch ring (58) into frictional engagement with said toothed whee (36) so that rotation of said toothed wheel may cause rotation of said clutch ring (58).

10. The automatically locking retractor of claim 5, further comprising:
at least one magnet attached to said clutch ring (58) to urge said clutch (58) ring into frictional engagement with said toothed wheel (36) so that rotation of said toothed wheel may case rotation of said clutch ring.

11. The automatically locking retractor of claim 5, wherein said indicia (15) is disposed outside of said housing when said belt is between said partially extended position and said fully extended position.

12. The automatically locking retractor of claim 8, further comprising:
said indicia (15) disposed within said housing when said belt is between said partially extended position and said fully retracted position.

13. An automatically locking retractor (10) according to claim 1, further comprising:
a frame (18) having a base portion (18A), a first wall portion (18B) substantially perpendicular to said base portion, and a second wall portion (18C) substantially parallel to said first wall portion;
an axle (32) extending from said first wall portion of said frame to said second wall portion of said frame;
at least one toothed wheel (36) connected to said spool;
a spacer connected to said spool-locking mechanism and engageable with said belt to separate said spool-locking mechanism from said toothed wheel while said belt moves between said fully retracted position and said partially extended position;
a semi-circular notch (62) formed in said first wall portion;
a clutch ring (58, 72) rotatably mounted on said axle for frictional engagement with said toothed wheel;
a wave spring (60) mounted on said axle and engageable with said first wall portion to bias said clutch ring into engagement with said toothed wheel so that rotation of said toothed wheel may cause rotation of said clutch ring;
a first tab (68) extending from the outer periphery of said clutch ring and engageable with said spool-locking mechanism to space said spool-locking mechanism and said toothed wheel;
a second tab (70) extending from the outer periphery of said clutch ring and engageable with said notch to limit the range of motion of said clutch ring between a first position wherein said first tab engages said spool-locking mechanism, and a second position wherein first tab is spaced from aid spool-locking mechanism;
wherein said belt (14) has a fully extended position, a fully retracted position, and a partially extended position between said fully extended position and said fully retracted position;
wherein said spool (30) is rotatably mounted on said axle for winding said belt, movable in a first direction, wherein said belt extends from said spool toward said fully extended position of said belt, and a second direction, wherein said belt retracts onto said spool toward said fully retracted position of said belt, and said spool biased for rotation in said second direction;
and wherein the spool-locking mechanism (42) is engageable with said toothed wheel to restrain said spool against moving in said first direction, and said spool-locking mechanism biased for engagement with said toothed wheel.

14. The apparatus of claim 10, wherein said indicia (15) is disposed outside of said housing (16) when said belt is between said partially extended position and said fully extended position.

15. The automatically locking retractor of claim 11, further comprising
said indicia (15) disposed within said housing when said belt (14) is between said partially extended position and said fully retracted position.

16. The automatically locking retractor of claim 13, further comprising:
a wave spring (60) mounted on said axle and engageable with said first wall portion to bias said clutch ring (58) into engagement with said toothed wheel (36) so that rotation of said toothed wheel may cause rotation of said clutch ring.

17. The automatically locking retractor of claim 13, further comprising:
at least one magnet (18) attached to said clutch ring (58) to urge said clutch ring into frictional engagement with said toothed (36) wheel so that rotation of said toothed wheel may cause rotation of said clutch ring.

## Patentansprüche

1. Automatisch sperrender Gurtaufroller (10), der aufweist:
ein Gehäuse (16);
eine Trommel (30), die innerhalb des Gehäuses angeordnet ist;
einen Gurt (14), der mit der Trommel verbunden und zwischen einer vollständig ausgezogenen Position, einer vollständig zurückgezogenen Position und einer teilweise ausgezogenen Position aufrollbar ist;
einen Trommelsperrmechanismus (42), der mit der Trommel in Eingriff kommen kann, während sich der Gurt zwischen der teilweise ausgezogenen Position und der vollständig ausgezogenen Position bewegt; und
eine Kennzeichnung (15), die am Gurt angebracht ist, um einen Benutzer davor zu warnen, dass der Trommelsperrmechanismus einrastbar ist, **dadurch gekennzeichnet, dass** die Kennzeichnung außerhalb des Gehäuses angeordnet ist, wenn der Trommelsperrmechanismus einrastbar ist.

2. Automatisch sperrender Gurtaufroller nach Anspruch 1, der außerdem aufweist:
dass sich die teilweise ausgezogene Position zwischen der vollständig ausgezogenen Position und der vollständig zurückgezogenen Position befindet.

3. Automatisch sperrender Gurtaufroller nach Anspruch 1, der außerdem aufweist:
dass der Trommelsperrmechanismus (42) mit der Trommel (30) in Eingriff kommt, um den Gurt (14) gegen ein weiteres Ausziehen als Reaktion auf die Bewegung des Gurtes in Richtung der vollständig zurückgezogenen Position zurückzuhalten.

4. Automatisch sperrender Gurtaufroller nach Anspruch 1, der außerdem aufweist:
dass die Kennzeichnung (15) innerhalb des Gehäuses (16) angeordnet ist, wenn sich der Gurt zwischen der teilweise ausgezogenen Position und der vollständig zurückgezogenen Position befindet.

5. Automatisch sperrender Gurtaufroller (10) nach Anspruch 1, der außerdem aufweist:
einen Rahmen (18);
mindestens ein Zahnrad (36), das mit der Trommel verbunden ist;
einen Kupplungsring (58), der mit dem Trommelsperrmechanismus in Eingriff kommen kann, um den Trommelsperrmechanismus vom Zahnrad zu trennen, während sich die Trommel in der ersten Richtung bewegt; und
ein Distanzstück, das mit dem Trommelsperrmechanismus verbunden ist und mit dem Gurt in Eingriff kommen kann, um den Trommelsperrmechanismus vom Zahnrad zu trennen, während sich der Gurt zwischen der vollständig zurückgezogenen Position und der teilweise zurückgezogenen Position bewegt,
wobei der Gurt (14) eine vollständig ausgezogene Position, eine vollständig zurückgezogene Position und eine teilweise ausgezogene Position zwischen der vollständig ausgezogenen Position und der vollständig zurückgezogenen Position aufweist;
wobei die Trommel (30) am Rahmen für das Aufrollen des Gurtes montiert ist, in einer ersten Richtung beweglich, wobei sich der Gurt von der Trommel in Richtung einer vollständig ausgezogenen Position des Gurtes auszieht, und in einer zweiten Richtung, wobei sich der Gurt auf die Trommel in Richtung der vollständig zurückgezogenen Position des Gurtes zurückzieht, und wobei die Trommel für eine Drehung in der zweiten Richtung vorgespannt wird;
und wobei der Trommelsperrmechanismus (42) mit dem Zahnrad in Eingriff kommen kann, um die Trommel gegen eine Bewegung in der ersten Richtung zurückzuhalten.

6. Automatisch sperrender Gurtaufroller nach Anspruch 5, der außerdem aufweist:
dass der Trommelsperrmechanismus (42) zum Zweck eines Eingriffs mit dem Zahnrad (36) vorgespannt wird.

7. Automatisch sperrender Gurtaufroller nach Anspruch 5, der außerdem aufweist:
dass der Kupplungsring (58) zwischen einer ersten Position, in der der Kupplungsring mit dem Trommelsperrmechanismus (42) in Eingriff kommt, um den Trommelsperrmechanismus (42) vor einem Eingriff mit dem Zahnrad (36) zurückzuhalten, und einer zweiten Position beweglich ist, in der der Kupplungsring vom Trommelsperrmechanismus beabstandet ist.

8. Automatisch sperrender Gurtaufroller nach Anspruch 7, der außerdem aufweist:
dass der Kupplungsring (58) in einen reibschlüssigen Eingriff mit dem Zahnrad (36) für eine Bewegung zwischen der ersten Position und der zweiten Position vorgespannt wird.

9. Automatisch sperrender Gurtaufroller nach Anspruch 5, der außerdem aufweist:
eine gewellte Feder (60) für das Vorspannen des Kupplungsringes (58) in einen reibschlüssigen Eingriff mit dem Zahnrad (36), so dass die Drehung des Zahnrades die Drehung des Kupplungsringes (58) hervorrufen kann.

10. Automatisch sperrender Gurtaufroller nach Anspruch 5, der außerdem aufweist:
mindestens einen Magneten, der am Kupplungsring (58) befestigt ist, um den Kupplungsring (58) in einen reibschlüssigen Eingriff mit dem Zahnrad (36) zu treiben, so dass die Drehung des Zahnrades die Drehung des Kupplungsringes bewirken kann.

11. Automatisch sperrender Gurtaufroller nach Anspruch 5, bei dem die Kennzeichnung (15) außerhalb des Gehäuses angeordnet ist, wenn sich der Gurt zwischen der teilweise ausgezogenen Position und der vollständig ausgezogenen Position befindet.

12. Automatisch sperrender Gurtaufroller nach Anspruch 8, der außerdem aufweist:
dass die Kennzeichnung (15) innerhalb des Gehäuses angeordnet ist, wenn sich der Gurt zwischen der teilweise ausgezogenen Position und der vollständig zurückgezogenen Position befindet.

13. Automatisch sperrender Gurtaufroller (10) nach Anspruch 1, der außerdem aufweist:
einen Rahmen (18) mit einem Basisabschnitt (18A), einem ersten Wandabschnitt (18B), der im Wesentlichen senkrecht zum Basisabschnitt verläuft, und einem zweiten Wandabschnitt (18C), der im Wesentlichen parallel zum ersten Wandabschnitt verläuft;
eine Achse (32), die sich vom ersten Wandabschnitt des Rahmens zum zweiten Wandabschnitt des Rahmens erstreckt;
mindestens ein Zahnrad (36), das mit der Trommel verbunden ist;
ein Distanzstück, das mit dem Trommelsperrmechanismus verbunden ist und mit dem Gurt in Eingriff kommen kann, um den Trommelsperrmechanismus vom Zahnrad zu trennen, während sich der Gurt zwischen der vollständig zurückgezogenen Position und der teilweise ausgezogenen Position bewegt;
eine halbkreisförmige Kerbe (62), die im ersten Wandabschnitt ausgebildet ist;
einen Kupplungsring (58, 72), der drehbar auf der Achse für einen reibschlüssigen Eingriff mit dem Zahnrad montiert ist;
eine gewellte Feder (60), die auf der Achse montiert ist und mit dem ersten Wandabschnitt in Eingriff kommen kann, um den Kupplungsring in Eingriff mit dem Zahnrad vorzuspannen, so dass die Drehung des Zahnrades die Drehung des Kupplungsringes hervorrufen kann;
einen ersten Vorsprung (68), der sich vom äußeren Umfang des Kupplungsringes aus erstreckt und mit dem Trommelsperrmechanismus in Eingriff kommen kann, um den Trommelsperrmechanismus und das Zahnrad mit Abstand anzuordnen;
einen zweiten Vorsprung (70), der sich vom äußeren Umfang des Kupplungsringes aus erstreckt und mit der Kerbe in Eingriff kommen kann, um den Bewegungsbereich des Kupplungsringes zwischen einer ersten Position, in der der erste Vorsprung mit dem Trommelsperrmechanismus in Eingriff kommt, und einer zweiten Position zu begrenzen, in der der erste Vorsprung von dem Trommelsperrmechanismus beabstandet ist;
wobei der Gurt (14) eine vollständig ausgezogene Position, eine vollständig zurückgezogene Position und eine teilweise ausgezogene Position zwischen der vollständig ausgezogenen Position und der vollständig zurückgezogenen Position aufweist;
wobei die Trommel (30) auf der Achse für ein Aufrollen des Gurtes drehbar montiert ist, in einer ersten Richtung beweglich, in der sich der Gurt von der Trommel in Richtung der vollständig ausgezogenen Position des Gurtes auszieht, und einer zweiten Richtung, in der sich der Gurt auf die Trommel in Richtung der vollständig zurückgezogenen Position des Gurtes zurückzieht, und wobei die Trommel für eine Drehung in der zweiten Richtung vorgespannt wird;
und wobei der Trommelsperrmechanismus (42) mit dem Zahnrad in Eingriff kommen kann, um die Trommel gegen eine Bewegung in der ersten Richtung zurückzuhalten, und wobei der Trommelsperrmechanismus für einen Eingriff mit dem Zahnrad vorgespannt wird.

14. Vorrichtung nach Anspruch 10, bei der die Kennzeichnung (15) außerhalb des Gehäuses (16) angeordnet ist, wenn sich der Gurt zwischen der teilweise ausgezogenen Position und der vollständig ausgezogenen Position befindet.

15. Automatisch sperrender Gurtaufroller nach Anspruch 11, der außerdem aufweist:
dass die Kennzeichnung (15) innerhalb des Gehäuses angeordnet ist, wenn sich der Gurt (14) zwischen der teilweise ausgezogenen Position und der vollständig zurückgezogenen Position befindet.

16. Automatisch sperrender Gurtaufroller nach Anspruch 13, der außerdem aufweist:
eine gewellte Feder (60), die auf der Achse montiert ist und mit dem ersten Wandabschnitt in Eingriff kommen kann, um den Kupplungsring (58) in Eingriff mit dem Zahnrad (36) vorzuspannen, so dass die Drehung des Zahnrades die Drehung des Kupplungsringes hervorrufen kann.

17. Automatisch sperrender Gurtaufroller nach Anspruch 13, der außerdem aufweist:
mindestens einen Magneten (18), der am Kupplungsring (58) befestigt ist, um den Kupplungsring in einen reibschlüssigen Eingriff mit dem Zahnrad (36) zu treiben, so dass die Drehung des Zahnrades die Drehung des Kupplungsringes bewirken kann.

## Revendications

1. Enrouleur à verrouillage automatique (10), comprenant :
un boîtier (16) ;
une bobine (30), agencée dans ledit boîtier ;
une ceinture (14) connectée à ladite bobine et pouvant être enroulée entre une position complètement étendue, une position complètement rétractée et une position partiellement étendue ;
un mécanisme de verrouillage de la bobine (42), pouvant s'engager dans ladite bobine pendant le déplacement de ladite ceinture entre ladite position partiellement étendue et ladite position complètement étendue ; et
des repères (15), montés sur ladite ceinture pour avertir un utilisateur du fait que ledit mécanisme de verrouillage de la bobine peut être engagé, **caractérisé en ce que** lesdits repères sont agencés à l'extérieur dudit boîtier lorsque ledit mécanisme de verrouillage de la bobine peut être engagé.

2. Enrouleur à verrouillage automatique selon la revendication 1, comprenant en outre :
ladite position partiellement étendue entre ladite position complètement étendue et ladite position complètement rétractée.

3. Enrouleur à verrouillage automatique selon la revendication 1, comprenant en outre :
ledit mécanisme de verrouillage de la bobine (42), s'engageant dans ladite bobine (30) pour empêcher une extension ultérieure de ladite ceinture (14) en réponse au déplacement de ladite ceinture vers ladite position complètement rétractée.

4. Enrouleur à verrouillage automatique selon la revendication 1, comprenant en outre :
lesdits repères (15), agencés dans ledit boîtier (16) lorsque ladite ceinture se trouve entre ladite position partiellement étendue et ladite position complètement rétractée.

5. Enrouleur à verrouillage automatique (10) selon la revendication 1, comprenant en outre :
un cadre (18) ;
au moins une roue dentée (36) connectée à ladite bobine ;
une bague d'embrayage (58), pouvant s'engager dans ledit mécanisme de verrouillage de la bobine pour séparer ledit mécanisme de verrouillage de la bobine de ladite roue dentée pendant le déplacement de ladite bobine dans ladite première direction ; et
un élément d'espacement connecté audit mécanisme de verrouillage de la bobine et pouvant s'engager dans ladite ceinture pour séparer ledit mécanisme de verrouillage de la bobine de ladite roue dentée pendant le déplacement de ladite ceinture entre ladite position complètement rétractée et ladite position partiellement rétractée ;
ladite ceinture (14) comportant une position complètement étendue, une position complètement rétractée et une position partiellement étendue entre ladite position complètement étendue et ladite position complètement rétractée ;
ladite bobine (30) étant montée sur ledit cadre pour enrouler ladite ceinture, pouvant se déplacer dans une première direction, dans laquelle ladite ceinture s'étend de ladite bobine vers une position complètement étendue de ladite ceinture, et dans une deuxième direction, dans laquelle ladite ceinture est enroulée sur ladite bobine, vers ladite position complètement rétractée de ladite ceinture, ladite bobine étant entraînée à tourner dans ladite deuxième direction ;
ledit mécanisme de verrouillage de la bobine (42) pouvant s'engager dans ladite roue dentée pour empêcher un déplacement de ladite bobine dans ladite première direction.

6. Enrouleur à verrouillage automatique selon la revendication 5, comprenant en outre :
ledit mécanisme de verrouillage de la bobine (42), entraîné à s'engager dans ladite roue dentée (36).

7. Enrouleur à verrouillage automatique selon la revendication 5, comprenant en outre :
ladite bague d'embrayage (58), pouvant être déplacée entre une première position, dans laquelle ladite bague d'embrayage s'engage dans ledit mécanisme de verrouillage de la bobine (42) pour empêcher un engagement dudit mécanisme de verrouillage de la bobine (42) dans ladite roue dentée (36), et une deuxième position, dans laquelle ladite bague d'embrayage est espacée dudit mécanisme de verrouillage de la bobine.

8. Enrouleur à verrouillage automatique selon la revendication 7, comprenant en outre :
ladite bague d'embrayage (58) entraînée à s'engager par frottement dans ladite roue dentée (36), en vue d'un déplacement entre ladite première position et ladite deuxième position.

9. Enrouleur à verrouillage automatique selon la revendication 5, comprenant en outre :
un ressort ondulé (60), pour entraîner l'engagement par frottement de ladite bague d'embrayage (58) dans ladite roue dentée (36), de sorte que la rotation de ladite roue dentée peut entraîner la rotation de ladite bague d'embrayage (58).

10. Enrouleur à verrouillage automatique selon la revendication 5, comprenant en outre :
au moins un aimant, fixé sur ladite bague d'embrayage (58) pour entraîner l'engagement par frottement de ladite bague d'embrayage (58) dans ladite roue dentée (36), de sorte que la rotation de ladite roue dentée peut entraîner la rotation de ladite bague d'embrayage.

11. Enrouleur à verrouillage automatique selon la revendication 5, dans lequel lesdits repères (15) sont agencés à l'extérieur dudit boîtier lorsque ladite ceinture se trouve entre ladite position partiellement étendue et ladite position complètement étendue.

12. Enrouleur à verrouillage automatique selon la revendication 8, comprenant en outre :
lesdits repères (15), agencés dans ledit boîtier lorsque ladite ceinture se trouve entre ladite position partiellement étendue et ladite position complètement rétractée.

13. Enrouleur à verrouillage automatique (10) selon la revendication 1, comprenant en outre :
un cadre (18), comportant une partie de base (18A), une première partie de paroi (18B), pratiquement perpendiculaire à ladite partie de base, et une deuxième partie de paroi (18C), pratiquement parallèle à ladite première partie de paroi ;
un essieu (32), s'étendant de la première partie de paroi dudit cadre vers ladite deuxième partie de paroi dudit cadre ;
au moins une roue dentée (36) connectée à ladite bobine ;
un élément d'espacement connecté audit mécanisme de verrouillage de la bobine et pouvant s'engager dans ladite ceinture pour séparer ledit mécanisme de verrouillage de la bobine de ladite roue dentée pendant le déplacement de ladite ceinture entre ladite position complètement rétractée et ladite position partiellement étendue ;
une encoche semi-circulaire (62) formée dans ladite première partie de paroi ;
une bague d'embrayage (58, 72), montée de manière rotative sur ledit essieu, en vue d'un engagement par frottement dans ladite roue dentée ;
un ressort ondulé (60), monté sur ledit essieu et pouvant s'engager dans ladite première partie de paroi pour entraîner l'engagement de ladite bague d'embrayage dans ladite roue dentée, de sorte que la rotation de ladite roue dentée peut entraîner la rotation de ladite bague d'embrayage ;
une première patte (68), s'étendant à partir de la périphérie externe de ladite bague d'embrayage et pouvant s'engager dans ledit mécanisme de verrouillage de la bobine pour espacer ledit mécanisme de verrouillage de la bobine de ladite roue dentée ;
une deuxième patte (70), s'étendant à partir de la périphérie externe de ladite bague d'embrayage et pouvant s'engager dans ladite encoche pour limiter l'intervalle de déplacement de ladite bague d'embrayage entre une première position, dans laquelle ladite première patte s'engage dans ledit mécanisme de verrouillage de la bobine, et une deuxième position, dans laquelle la première patte est espacée dudit mécanisme de verrouillage de la bobine ;
ladite ceinture (14) comportant une position complètement étendue, une position complètement rétractée et une position partiellement étendue entre ladite position complètement étendue et ladite position complètement rétractée ;
ladite bobine (30) étant montée de manière rotative sur ledit essieu pour enrouler ladite ceinture, pouvant être déplacée dans une première direction, dans laquelle ladite ceinture s'étend à partir de ladite bobine vers ladite position complètement étendue de ladite ceinture, et dans une deuxième direction, dans laquelle ladite ceinture est enroulée sur ladite bobine, vers ladite position complètement rétractée de ladite ceinture, ladite bobine étant entraînée à tourner dans ladite deuxième direction ;
ledit mécanisme de verrouillage de la bobine (42) pouvant s'engager dans ladite roue dentée pour empêcher le déplacement de ladite bobine dans ladite première direction, ledit mécanisme de verrouillage de la bobine étant entraîné à s'engager dans ladite roue dentée.

14. Enrouleur à verrouillage automatique selon la revendication 10, dans lequel lesdits repères (15) sont agencés à l'extérieur dudit boîtier (16) lorsque ladite ceinture se trouve entre ladite position partiellement étendue et ladite position complètement étendue.

15. Enrouleur à verrouillage automatique selon la revendication 11, comprenant en outre :
lesdits repères (15) agencés dans ledit boîtier lorsque ladite ceinture (14) se trouve entre ladite position partiellement étendue et ladite position complètement rétractée.

16. Enrouleur à verrouillage automatique selon la revendication 13, comprenant en outre :
un ressort ondulé (60), monté sur ledit essieu et pouvant s'engager dans ladite première partie de paroi pour entraîner l'engagement de ladite bague d'embrayage (58) dans ladite roue dentée (36), de sorte que la rotation de ladite roue dentée peut entraîner la rotation de ladite bague d'embrayage.

17. Enrouleur à verrouillage automatique selon la revendication 13, comprenant en outre :
au moins un aimant (18), fixé sur ladite bague d'embrayage (58), pour entraîner un engagement par frottement de ladite bague d'embrayage dans ladite roue dentée (36), de sorte que la rotation de ladite roue dentée peut entraîner la rotation de ladite bague d'embrayage.
